Europäisches Patentamt

European Patent Office

Office européen des brevets

(19)

(11) **EP 0 886 126 A1**

(12) **EUROPÄISCHE PATENTANMELDUNG**

(43) Veröffentlichungstag:
    **23.12.1998 Patentblatt 1998/52**

(51) Int. Cl.⁶: **G01D 3/02**, G01G 3/147

(21) Anmeldenummer: 98109842.9

(22) Anmeldetag: **29.05.1998**

(84) Benannte Vertragsstaaten:
    **AT BE CH CY DE DK ES FI FR GB GR IE IT LI LU
    MC NL PT SE**
    Benannte Erstreckungsstaaten:
    **AL LT LV MK RO SI**

(30) Priorität: **16.06.1997 DE 19725455**

(71) Anmelder:
    **MULTIPOND WÄGETECHNIK GMBH
    84478 Waldkraiburg (DE)**

(72) Erfinder: **Zeck, Wolfram C.**
    **84453 Mühldorf am Inn (DE)**

(74) Vertreter:
    **Prüfer, Lutz H., Dipl.-Phys. et al
    PRÜFER & PARTNER GbR,
    Patentanwälte,
    Harthauser Strasse 25d
    81545 München (DE)**

(54) **Signalverarbeitungsschaltung und Signalverarbeitungsverfahren zur Verarbeitung eines Messsignals von einem Aufnehmer einer Waage**

(57)     Es werden eine Signalverarbeitungsschaltung und ein Verfahren zur Verarbeitung eines Meßsignals von einem Aufnehmer einer Waage angegeben, bei denen mittels einer Kompensationsschaltung und einer Steuereinheit in einfacher Art und Weise die Verarbeitung des Meßsignals an den Wandlerbereich eines Analog-Digital-Wandlers angepaßt wird, so daß eine möglichst gute digitale Auflösung des aus dem Meßsignal erhaltenen Digitalsignals erhältlich ist.

FIG.1

**Beschreibung**

Die vorliegende Erfindung bezieht sich auf eine Signalverarbeitungsschaltung nach dem Oberbegriff des Anspruchs 1 und auf ein Verfahren zur Verarbeitung eines Meßsignals von einem Aufnehmer einer Waage.

Eine Signalverarbeitungsschaltung zur Verarbeitung eines Meßsignals von einem Aufnehmer einer Waage nach dem Oberbegriff des Anspruchs 1 ist aus der DE 22 60 439 C2 oder aus der DE 22 60 441 C3 bekannt. Es ist bekannt, daß analoge Signal eines Meßwertaufnehmers in ein Digitalsignal umzusetzen bzw. umzuwandeln und anschließend zu verarbeiten. Die Umwandlung geschieht üblicherweise mit einem Analog-Digital-Wandler. Ein solcher Analog-Digital-Wandler erlaubt die Wandlung eines Analogsignals, das innerhalb eines bestimmten Schwankungsbereiches variiert, in ein Digitalsignal mit einer vorbestimmten digitalen Auflösung. Dieser erlaubte Schwankungsbereich für das analoge Eingangssignal des Analog-Digital-Wandlers wird Wandlerbereich genannt. Zur Erzielung einer möglichst hohen Auflösung des erhaltenen Digitalsignals sollte das umzuwandelnde Analogsignal möglichst vollständig den Wandlerbereich ausnutzen.

Bei üblichen Digitalwaagen wird üblicherweise das Totlastsignal entweder auf mechanische oder auf elektrische Art derart kompensiert, daß das dem Meßbereich entsprechende Meßsignal den Wandlerbereich möglichst vollständig ausnutzen kann. Das Totlastsignal ist dabei das Ausgangssignal des Meßwertaufnehmers der Waage, das bei einer unbelasteten Waage als Analogsignal zur Analog-Digital-Wandlung kommt. Je nach Meßwertaufnehmer können dafür verschiedenartige mechanische Vorrichtungen zum Ausgleich der Totlast verwendet werden, so daß der Masse/Kraft-Aufnehmer (Meßwertaufnehmer) von dieser nicht oder nur in geringem Maße belastet wird und so kein oder nur ein sehr geringes Ausgangssignal liefert. Eine elektrische Kompensation wird üblicherweise so vorgenommen, daß über eine einstellbare Strom/Spannungsquelle dem Totlastsignal entgegengewirkt wird. Die Nachteile dieser üblichen Vorgehensweise liegen in der Notwendigkeit eines Eingriffs durch den Bediener und dem damit verbundenen Aufwand zur Bewirkung der Kompensation oder zu einer Korrektur der Kompensation.

Aus den beiden den Oberbegriff bildenden Patentschriften und außerdem aus der DE 32 02 686 A1 ist jeweils eine Meßbrücke bekannt, bei der durch einen Widerstand, der über ein pulsbreitenmoduliertes Signal geschaltet wird, die Meßbrücke so verstimmt wird, daß der Brückenausgang zu Null wird. Das Tastverhältnis (Verhältnis der Pulsbreite des Pulses mit hohem Pegel zu der Pulsbreite des Pulses mit niedrigem Pegel) des pulsbreitenmodulierten Signals dient dabei zur eigentlichen Messung der Brückenverstimmung und damit zur Bestimmung des Meßwertes.

Bei den üblichen Digitalwaagen besteht ein weiteres Problem darin, daß das Ausgangssignal eines Meßwertaufnehmers nicht nur von der Masse/Kraft-Einwirkung, sondern auch von anderen Umweltbedingungen wie Temperatur, Druck, Luftfeuchtigkeit, elektromagnetischen Feldern, elektrostatischen Ladungen o.ä. abhängt, die je nach Art des Meßwertaufnehmers und den momentan herrschenden Bedingungen zu mehr oder minder gravierenden Fehlmessungen fuhren können.

Es hat in der Vergangenheit verschiedene Ansätze gegeben, die Meßwertaufnehmer möglichst unabhängig von Störgrößen zu machen, indem der Einfluß der Störgrößen auf ein Mindestmaß reduziert werden sollte. Eine entsprechende Materialauswahl und komplizierte Kompensationselemente/-schaltungen sind dabei übliche Vorgehensweisen. Nachteilhaft an diesen Ansätzen ist unter anderem die Unmöglichkeit, unterschiedliche und von dem Typ der Meßwertaufnehmer abhängende Eigenschaften individuell zu kompensieren. Außerdem verursacht der vergleichsweise hohe technische Aufwand für die Störgrößenkompensation sowohl hohe Kosten als auch Platzprobleme.

Es ist Aufgabe der vorliegenden Erfindung, eine Signalverarbeitungsschaltung nach dem Oberbegriff des Anspruchs 1 und ein Verfahren zur Verarbeitung eines Meßsignals von einem Aufnehmer einer Waage anzugeben, mit denen jeweils in einfacher Weise eine gute Ausnutzung des Wandlerbereichs eines Analog-Digital-Wandlers ermöglicht wird.

Diese Aufgabe wird gelöst durch eine Signalverarbeitungsschaltung nach Anspruch 1 bzw. ein Verfahren nach Anspruch 12.

Weiterbildungen der Erfindung sind in den Unteransprüchen angegeben.

Die Ausgestaltung der Signalverarbeitungsschaltung nach Anspruch 5 bzw. die Ausgestaltung des Verfahrens nach Anspruch 13 ermöglichen in einfacher Weise, zusätzlich zur Erzielung einer guten Ausnutzung des Wandlerbereiches in einfacher Weise eine zusätzliche Nullpunktskorrektur vorzunehmen.

Weitere Merkmale und Zweckmäßigkeiten von Ausführungsbeispielen der Erfindung ergeben sich aus der nachfolgenden Beschreibung von Ausführungsformen anhand der Figuren. Von den Figuren zeigen:

Fig. 1 ein Blockschaltbild der Signalverarbeitungsschaltung nach einer Ausführungsform der Erfindung;

Fig. 2 eine Wägezelle mit einer Signalverarbeitungsschaltung nach einer Ausführungsform der Erfindung;

Fig. 3 ein Ersatzschaltbild einer Kompensationsschaltung nach einer Ausführungsform der Erfindung;

Fig. 4 Signalformen der Kompensationsschaltung aus Fig. 3; und

Fig. 5 ein Ersatzschaltbild einer Kurzschlußstufe nach einer Ausführungsform der Erfindung.

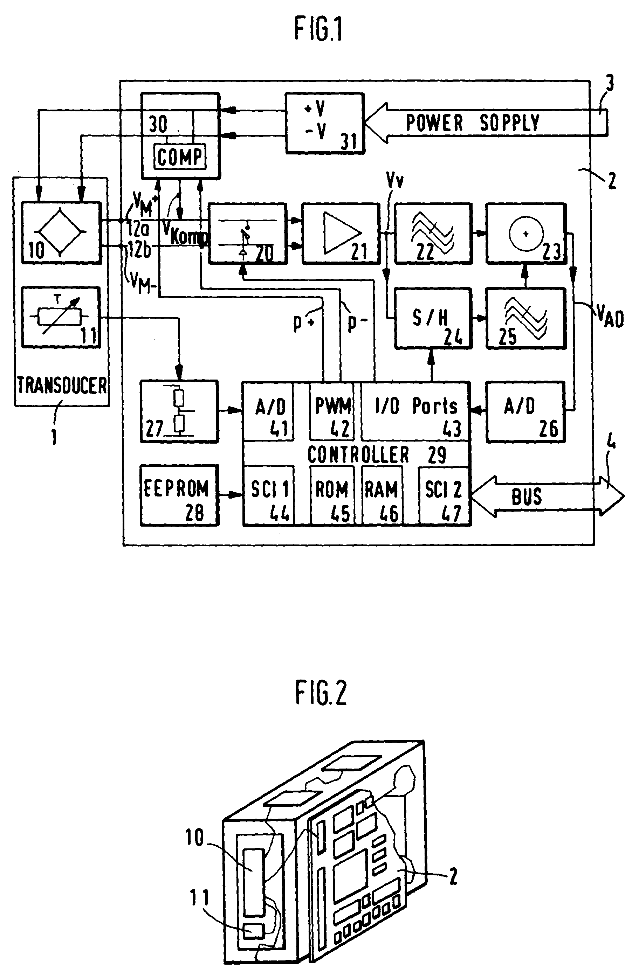

Fig. 1 zeigt ein Blockschaltbild einer Signalverarbeitungsschaltung 2 nach einer Ausführungsform der Erfindung und die Verbindungen mit einem Meßwertaufnehmer 1, Stromversorgungsleitungen 3 und einem Datenbus 4. Eine Spannungserzeugerschaltung 31 ist mit den Stromversorgungsleitungen 3 verbunden und erzeugt zwei Spannungen +V, -V auf unterschiedlichem Pegel. Die beiden von der Spannungserzeugerschaltung 31 erzeugten Spannungen werden einer Kompensationsschaltung 30 und einem Meßwertaufnehmer 1 zugeführt. Der Meßwertaufnehmer 1 weist einen Aufnehmer 10 zur Lieferung eines Wägesignals $V_M+$, $V_M-$, welches ein Differenzsignal mit zwei Signalbestandteilen auf unterschiedlichem Spannungspegel ist, und einen Aufnehmer 11 zur Lieferung eines Signals, das eine Einflußgröße anzeigt, die das von dem Aufnehmer 10 gelieferte Meßsignal beeinflußt, auf. Das von dem Aufnehmer 10 gelieferte Meßsignal liegt an einem ersten Eingang, der jeweils einen Anschluß 12a, 12b für die beiden Signalbestandteile auf unterschiedlichem Spannungspegel aufweist, an. Die beiden Anschlüsse 12a, 12b sind über je eine Leitung mit zwei Eingängen eines Differenzverstärkers (Verstärkerschaltung) 21 verbunden. Die beiden Leitungen können über eine Kurzschlußschaltung 20 (siehe Fig. 5) mittels eines ansteuerbaren Leistungs-MOSFETs kurzgeschlossen werden. Eine der beiden Signalleitungen ist zusätzlich mit einem Ausgang der Kompensationsschaltung 30 verbunden. Der Ausgang des Differenzverstärkers 21 ist mit einem Eingang einer Tiefpaßfilterschaltung (Tiefpaß) 22 und einem Eingang einer Abtast-Halte-Schaltung (Sample-Hold-Schaltung) 24 verbunden. Der Ausgang der Abtast-Halte-Schaltung 24 ist mit dem Eingang einer invertierenden Tiefpaßfilterschaltung 25 verbunden. Ein Ausgang der Tiefpaßfilterschaltung 22 ist mit einem Eingang eines Addierers 23 verbunden. Der Ausgang der invertierenden Tiefpaßfilterschaltung 25 ist mit einem anderen Eingang des Addierers 23 verbunden. Der Ausgang des Addierers 23 ist mit einem Eingang eines ersten Analog-Digital-Wandlers (A/D-Wandler) 26 verbunden. Der Ausgang des ersten A/D-Wandlers 26 ist mit einem Eingang einer Steuereinheit 29 verbunden. Die Steuereinheit 29 weist neben einer zentralen Prozessoreinheit (CPU) einen zweiten A/D-Wandler 41, eine Erzeugerschaltung 42 zur Erzeugung pulsbreitenmodulierter Signale, einen Eingangs/Ausgangs-Baustein (I/O-Baustein) 43, zwei weitere Schnittstellen 44, 47, einen ROM 45 und einen RAM 46 auf.

Das Ausgangssignal des ersten A/D-Wandlers 26 wird der Steuereinheit 29 über den I/O-Baustein 43 eingegeben. Der zweite A/D-Wandler 41, der in der Steuereinheit 29 vorgesehen ist, erhält als Eingangssignal über eine Meßschaltung 27 ein Signal, das zu dem Ausgangssignal des Aufnehmers 11 für die Einflußgröße korrelliert ist.

Die Schnittstelle 44 ist mit einem EEPROM 28 verbunden, in dem ein Kennlinienfeld für den Aufnehmer 10 gespeichert ist, das die Kennlinie des Aufnehmers 10 bezüglich einer oder mehrerer Einflußgrößen darstellt. Die andere Schnittstelle 47 ist mit dem Datenbus 4 verbunden. Die Steuereinheit gibt zwei pulsbreitenmodulierte Signale (Steuersignale) p+, p-, die von der Erzeugerschaltung 42 erzeugt werden, an die Kompensationsschaltung 30 aus. Die Kompensationsschaltung 30 erzeugt in Abhängigkeit von den pulsbreitenmodulierten Signalen eine Kompensationsspannung (Kompensationsgleichspannung) $V_{Komp}$. Die Kompensationsspannung $V_{Komp}$ ist eine Gleichspannung, die von der Kompensationsschaltung an die mit ihr verbundene Leitung von dem Anschluß 12a zu dem Differenzverstärker 21 angelegt wird, so daß auf dieser Leitung ein Signal anliegt, dessen Pegel durch die eine Signalkomponente des Meßsignals und die Kompensationsspannung bestimmt wird.

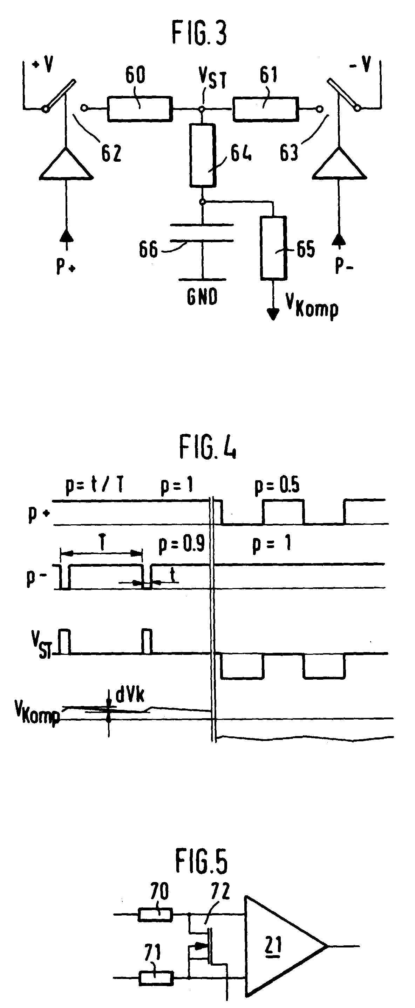

Die Kompensationsschaltung 30 ist bei der in Fig. 1 gezeigten Ausführungsform so aufgebaut, wie es in Fig. 3 gezeigt ist. Die Kompensationsschaltung 30 weist zwei Eingangsanschlüsse auf, die mit den beiden von der Erzeugerschaltung 31 erzeugten Spannungen +V, -V beaufschlagt sind. Die Spannung +V kann über einen steuerbaren Analogschalter 62 an einen Eingang eines Spannungsteilers angelegt werden, der aus zwei in Reihe geschalteten Widerständen (Spannungsteiler) 60, 61 besteht. Die Spannung -V kann über einen weiteren steuerbaren Analogschalter 63 an den anderen Eingang des Spannungsteilers angelegt werden. Der Verbindungsknoten der beiden Widerstände 60, 61 ist mit einer Reihenschaltung aus einem Widerstand 64 und einem Kondensator 66 verbunden. Die nicht mit dem Widerstand 64 verbundene Kondensatorplatte ist auf Masse gelegt. Mit dem Verbindungsknoten des Widerstands 64 und des Kondensators 66 ist ein Ende eines Widerstands 65 verbunden. An dem anderen Ende des Widerstands 65 wird die Kompensationsspannung $V_{Komp}$ ausgegeben. Der Analogschalter 62 wird über das eine der beiden pulsbreitenmodulierten Signale p+ und der andere Analogschalter 63 über das andere pulsbreitenmodulierte Signal p- angesteuert.

In Fig. 4 sind beispielhaft Signalformen der pulsbreitenmodulierten Signale p+, p-, die am Verbindungsknoten der beiden Widerstände 60, 61 anliegende Spannung $V_{ST}$ und die nach Glättung durch die Tiefpaßfilterschaltung (Tiefpaß) 64, 66 am Ausgang des Widerstandes 65 anfallende Kompensationsspannung $V_{Komp}$ dargestellt.

Die Steuereinheit 29 ist so ausgebildet, daß sie beim Einschalten der Signalverarbeitungsschaltung und/oder auf ein entsprechendes Anforderungssignal hin eine Kompensationsspannungseinstellung wie folgt durchführt.

Das Ausgangssignal $V_{AD}$ des Addierers 23 entspricht dem Ausgangssignal $V_V$ des Differenzverstärkers 21 ohne die durch den Tiefpaß 22 herausgefilterten hochfrequenten Anteile. Falls die Waage unbelastet ist, entspricht das von dem Aufnehmer 10 ausgegebene Meßsignal dem sogenannten Totlastsignal. Daher entspricht in diesem Fall die an dem ersten A/D-Wandler 26 anliegende Spannung (Analogsignal) $V_{AD}$ diesem Totlastsignal. Die Steuereinheit 29 variiert das Tastverhältnis der pulsbreitenmodulierten Signale p+, p- nun solange, bis das von dem Addierer ausgegebene Analogsignal $V_{AD}$ in einen vorbestimmten Bereich des Wandlerbereichs des ersten A/D-Wandlers 26 fällt. Die Erfüllung dieser Bedingung erkennt die Steuereinheit 29 an dem von dem A/D-Wandler ausgegebenen Signal. Der vorbestimmte Bereich wird von der Steuereinheit 29 entweder aufgrund eines in dem ROM 45 gespeicherten Steuerprogramms oder, zum Beispiel durch die externe Eingabe eines Bedieners, anderweitig ausgewählt.

Nachdem die Steuereinheit 29 anhand des Digitalsignals von dem A/D-Wandler 26 festgestellt hat, daß das Analogsignal $V_{AD}$ im gewünschten Bereich liegt, wird das Tastverhältnis der pulsbreitenmodulierten Signale p+, p- in dem RAM 46 gespeichert.

In Fig. 4 ist beispielhaft dargestellt, wie durch die Einstellung des Verhältnisses der Pulsbreite des Pegels der beiden pulsbreitenmodulierten Signale die Kompensationsspannung $V_{Komp}$ erhalten wird, die durch den Tiefpaß 64, 66 als geglättete Gleichspannung mit einer Restwelligkeit, die von der Güte des Tiefpasses abhängt, ausgegeben wird. Die Frequenz der pulsbreitenmodulierten Signale wird so hoch gewählt, daß die Restwelligkeit des resultierenden Ausgangssignals des Differenzverstärkers 21 von dem Tiefpaß 22 vollständig unterdrückt wird. Die Kompensationsspannung $V_{Komp}$ kann durch folgende Formel dargestellt werden:

$$V_{Komp} = (p+)^*(+V)+(p-)^*(-V)$$

wobei p+, p- jeweils das Tastverhältnis P=t/T der jeweiligen pulsbreitenmodulierten Signale p+, p-, t die Zeitdauer des Pulsanteils mit niedrigem Pegel einer Schwingung und T die Zeitdauer einer Schwingung des entsprechenden pulsbreitenmodulierten Signals darstellen.

Die Signalverarbeitungsschaltung nach der vorliegenden Ausführungsform weist weiterhin eine gleichtaktbezogene Nullpunktskorrekturschaltung auf. Diese besteht aus der gleichtaktbezogenen Kurzschlußschaltung 20, der Abtast-Halte-Schaltung 24 zur analogen Nullpunktsspeicherung, dem invertierenden Tiefpaß 25 und dem Addierer 23, in dem das von dem Tiefpaß 22 geglättete Ausgangssignal des Differenzverstärkers 21 von der momentanen, gleichtaktbezogenen Nullpunktsabweichung bereinigt wird. Diese Bereinigung geschieht dadurch, daß die Nullpunktsabweichung durch den Tiefpaßfilter nicht nur geglättet bzw. von den hochfrequenten Bestandteilen befreit, sondern außerdem invertiert wird.

Bei den üblichen Differenzeingängen eines Meßverstärkers entstehen bei Störeinwirkungen auf das Meßsystem hauptsächlich Gleichtaktspannungen. Bei der in Fig. 5 gezeigten Ausführungsform der Kurzschlußschaltung 20 sind die beiden Anschlüsse 12a, 12b über zwei Widerstände 70, 71 mit den beiden Eingängen des Differenzverstärkers verbunden, die über den Leistungs-MOSFET 72, der einen geringen Einschaltwiderstand aufweist, kurzgeschlossen werden können. Beim Kurzschließen wird nicht, wie üblich, das Referenzpotential angelegt und die Verbindung zu den Anschlüssen 12a, 12b wird ebenfalls nicht getrennt, so daß am Ausgang des Differenzverstärkers 21 nach dem Durchschalten der Kurzschlußschaltung eine Nullpunktsspannung auftritt, die sowohl auf eine momentane Gleichtaktspannung als auch auf die Offset-Spannungen des Verstärkers zurückzuführen ist. Die diesem Ausgangssignal entsprechende Spannung wird in der Abtast-Halte-Schaltung analog gespeichert, über den invertierenden Tiefpaß 25 integriert und geglättet und in dem Addierer 23 beim Normalbetrieb von dem eigentlichen Meßsignal, das verstärkt und geglättet ist, aufgrund der Invertierung abgezogen. Die Phase des Kurzschließens der beiden Eingänge dauert dabei nur so lange, bis sich die Ausgangsspannung am Verstärkerausgang auf einen stabilen Wert eingependelt hat und die Abtast-Halte-Schaltung 24 diese gespeichert hat. Im übrigen ist die Kurzschlußschaltung 20 im Normalbetrieb offen, so daß das Eingangssignal normal gemessen und in dem Addierer 23 um den zuletzt gespeicherten Nullpunktskorrekturbetrag korrigiert wird. Beispielsweise wird alle 20 ms für 200 μs ein Kurzschließen ausgeführt.

Bei häufigen Korrekturzyklen kann somit schnell auf ein dem Meßsignal überlagertes Gleichtaktstörsignal reagiert werden. Gleichzeitig geht allerdings durch häufiges Nullstellen geringfügig an Empfindlichkeit verloren. Ein Kompromiß ist dabei je nach Anwendung zu finden.

Besonders wichtig für die Störfestigkeit des Meßwertaufnehmers ist auch dessen Stromversorgung. Wenn der Meßwertaufnehmer über lange Leitungen mit der Stromversorgung verbunden ist, kann leicht eine Störkomponente im Meßsignal bewirkt werden. Bei der vorliegenden Ausführungsform werden die Spannungen für die Stromversorgung des Meßwertaufnehmers in der Spannungserzeugerschaltung 31 erzeugt. Nach einer bevorzugten Ausführungsform der Erfindung, wie sie in Fig. 2 gezeigt ist, ist eine Wägezelle mit dem Meßwertaufnehmer 10 auch mit der Signalverarbeitungsschaltung vorgesehen, so daß die Stromversorgung für den Meßwertaufnehmer sehr nahe beim Meßwertaufnehmer erzeugt wird. Diese 'Insellösung' für die Stromversorgung des Meßwertaufnehmers reduziert die Möglichkeit von Störeinflüssen auf die Zufuhrleitungen für die Stromversorgung des Meßwertaufnehmers 1 erheblich.

Die Signalverarbeitungsschaltung 2 für den Aufnehmer 1 befindet sich, wie es in Fig. 2 gezeigt ist, in dessen unmittelbarer Nähe. Daher sind die Verbindungen vom Aufnehmer zur Signalverarbeitungsschaltung sehr kurz und können einfach geschirmt werden. Die Verbindung zu der nächsthöheren Ebene der Messungs/Regel/Steuer-Elektronik, zum Beispiel einem Host-Rechner, erfolgt über den Datenbus 4, über den in digitaler Form ein Austausch von Daten zwischen der Aufnehmerelektronik und der nächsthöheren Steuerebene stattfinden kann. Das ist insbesondere dann vorteilhaft, wenn eine Mehrzahl der Wägezellen verwendet wird, wie zum Beispiel in sogenannten Kombinationswaagen. Dabei können die Parameter, die zur Anpassung und Auswertung der Meßsignale benötigt werden, von der nächsthöheren Steuerebene an die Signalverarbeitungsschaltung jedes Aufnehmers geschickt werden, entsprechende Daten abgefragt werden, oder andere Funktionen der Steuereinheiten 29 der Signalverarbeitungsschaltung ausgelöst bzw. angefordert werden.

Weiterhin kann in einfacher Weise eine individuelle Anpassung an Umwelteinflüsse, die die Kennlinie des Aufnehmers beeinflussen, erfolgen. Eine Einflußgröße, wie zum Beispiel Temperatur, Druck, ..., die die Kennlinie des Aufnehmers 10 beeinflußt, wird über einen weiteren Aufnehmer 11, z.B. einen Thermistor gemessen. Der Einfluß dieser gemessenen Einflußgröße auf das eigentliche Meßsignal des Aufnehmers 10 kann dann von der Steuereinheit 29 in üblicher Weise unter Verwendung des Kennlinienfeldes, das in dem EEPROM 28 gespeichert ist, bei der Umrechnung des Digitalsignals von dem ersten A/D-Wandler berücksichtigt werden.

Beim Einschreiben des Kennlinienfeldes in den EEPROM 28 werden zusätzlich Daten, mit denen eine Überprüfung des Kennlinienfeldes möglich ist, in Form einer oder mehrerer sogenannter Checksummen, mitgespeichert. Die Steuereinheit 29 überprüft anhand der Checksummen, ob die der Checksumme entsprechenden Daten des Kennlinienfeldes korrekt sind. Falls ein Speicherfehler auftritt, können die Daten des Kennlinienfeldes ohne Austausch der Wägezelle von der Steuereinheit aus einem nicht-flüchtigen. Speicher wieder in den EEPROM geschrieben werden.

## Patentansprüche

1. Signalverarbeitungsschaltung zur Verarbeitung eines Meßsignals von einem Meßwertaufnehmer (1) einer Waage mit einem ersten Eingang (12a, 12b), an dem das Meßsignal ($V_M$+, $V_M$-) anliegt,

   einer Verstärkerschaltung (21), die ein an einem Verstärkereingang anliegendes Eingangssignal (($V_M$+)+ $V_{Komp}$, $V_M$-) verstärkt und als Ausgangssignal ($V_V$) ausgibt,
   einem Analog-Digital-Wandler (26), der einen bestimmten Wandlerbereich aufweist und ein mit dem Ausgangssignal ($V_V$) korreliertes Analogsignal ($V_{AD}$) empfängt und in ein Digitalsignal wandelt, und
einer Steuereinheit (29), die das Digitalsignal empfängt und den Signalverarbeitungsbetrieb steuert,
dadurch gekennzeichnet,

daß eine Kompensationsschaltung (30) vorgesehen ist, die entsprechend einem von der Steuereinheit (29) gelieferten Steuersignal (p+, p-) eine Kompensationsgleichspannung ($V_{Komp}$) erzeugt, die mit dem Meßsignal ($V_M$+, $V_M$-) das Eingangssignal bildet, und
daß die Steuereinheit (29) so ausgebildet ist, daß sie das Steuersignal (p+, p-) bei einem Kompensationseinstellbetrieb solange variiert bis es einem Kompensationswert entspricht, bei dem das Analogsignal ($V_{AD}$) in einem bestimmbaren Bereich des Wandlerbereichs liegt, und das Steuersignal (p+, p-) bei Normalbetrieb mit diesem Kompensationswert ausgibt.

2. Signalverarbeitungsschaltung nach Anspruch 1, dadurch gekennzeichnet,

   daß das Steuersignal ein pulsbreitenmoduliertes Signal ist und die Pulsbreite den Pegel der Kompensationsgleichspannung bestimmt.

3. Signalverarbeitungsschaltung nach Anspruch 1 oder 2, dadurch gekennzeichnet,

   daß die Kompensationsschaltung (30) an zwei Spannungseingängen zwei Spannungen (+V, -V) auf unterschiedlichem Pegel empfängt und einen Spannungsteiler (60, 61) mit zwei Eingängen und einem Ausgang,
   zwei steuerbare Analogschalter (62, 63), von denen jeweils einer zwischen einen der Eingänge des Spannungsteilers und einen der Spannungseingänge geschaltet ist und die von dem Steuersignal gesteuert werden, und
   einen Tiefpaß (64, 66), der mit dem Ausgang des Spannungsteilers verbunden ist und die Kompensationsgleichspannung ($V_{Komp}$) ausgibt,

   aufweist.

4. Signalverarbeitungsschaltung nach Anspruch 3, dadurch gekennnzeichnet,

   daß das Steuersignal (p+, p-) aus zwei pulsbreitenmodulierten Signalen besteht, von denen jeweils eines einen der Analogschalter (62, 63) steuert.

5. Signalverarbeitungsschaltung nach einem der Ansprüche 1 bis 4, dadurch gekennzeichnet,

daß eine Nullpunktkorrekturschaltung (20, 24, 25, 23) vorgesehen ist, die bei einem Nullpunktkorrekturbetrieb das Ausgangssignal als Nullpunktkorrekturwert speichert und im Normalbetrieb den gespeicherten Nullpunktkorrekturwert von dem Ausgangssignal abzieht und das so erhaltene Signal als das Analogsignal an den Analog-Digital-Wandler (26) liefert.

6. Signalverarbeitungsschaltung nach einem der Ansprüche 1 bis 5, dadurch gekennzeichnet,

daß das Meßsignal ($V_M$+, $V_M$-) ein Differenzsignal zweier Spannungspegel ist,
daß die Verstärkerschaltung (21) ein Differenzverstärker (21) ist, und
daß die Kompensationsgleichspannung ($V_{Komp}$) einen der beiden Spannungspegel ($V_M$+) des Meßsignals ändert.

7. Signalverarbeitungsschaltung nach Anspruch 6, dadurch gekennzeichnet,

daß die Nullpunktkorrekturschaltung so ausgebildet ist, daß sie zur Ermittlung des Nullpunktkorrekturwertes die beiden Eingänge der Verstärkerschaltung (21) ohne Trennung vom ersten Eingang (12a, 12b) kurzschließt.

8. Signalverarbeitungsschaltung nach einem der Ansprüche 1 bis 7, dadurch gekennzeichnet,

daß ein zweiter Eingang, an dem ein Einflußgrößensignal anliegt, das eine den Meßwertaufnehmer beeinflußende Einflußgröße anzeigt und von dem Meßwertaufnehmer (1) geliefert wird, vorgesehen ist,
daß in der Steuereinheit (29) ein Kennlinienfeld des Meßwertaufnehmers, das die Abhängigkeit des Meßsignals von der Einflußgröße darstellt, gespeichert ist, und
daß die Steuereinheit (29) das Digitalsignal mit dem Kennlinienfeld auswertet.

9. Signalverarbeitungsschaltung nach Anspruch 8, dadurch gekennzeichnet,

daß das Kennlinienfeld zusammen mit einer oder mehreren Check-Summen zur Überprüfung von Speicherfehlern des Kennlinienfeldes gespeichert ist.

10. Signalverarbeitungsschaltung nach einem der Ansprüche 1 bis 9, dadurch gekennzeichnet,

daß ein Tiefpaß (22) zum Filtern der hochfrequenten Anteile des Ausgangssignals ($V_V$) vorgesehen ist.

11. Signalverarbeitungsschaltung nach einem der Ansprüche 1 bis 10, dadurch gekennzeichnet,

daß die Steuereinheit (29) über einen Datenbus (4) mit einer Steuereinheit einer höheren Ebene verbunden ist.

12. Verfahren zur Verarbeitung eines Meßsignals von einem Aufnehmer (1, 10, 11) einer Waage mit den Schritten:

Ermitteln eines Eingangssignals durch Addieren einer Kompensationsgleichspannung ($V_{Komp}$) zu dem Meßsignal ($V_M$+, $V_M$-),
Verstärken des Eingangssignals und Analog-Digital-Wandeln des verstärkten Eingangssignals mittels eines Analog-Digital-Wandlers (26), der einen bestimmten Wandlerbereich aufweist, wobei die Kompensationsgleichspannung ($V_{Komp}$) in einem Kompensationsgleichspannungsermittlungsschritt ermittelt wird, in dem die Kompensationsgleichspannung ($V_{Komp}$) solange variiert wird, bis das verstärkte Eingangssignal in einem bestimmbaren Bereich des Wandlerbereichs liegt, und
wobei die in dem Kompensationsgleichspannungsermittlungsschritt ermittelte Kompensationsgleichspannung bei der Ermittlung des Eingangssignals verwendet wird.

13. Verfahren nach Anspruch 12, dadurch gekennzeichnet,

daß in einem Nullpunktskorrekturwertermittlungsschritt das Ausgangssignal als ein Nullpunktskorrekturwert gespeichert wird, das dem Eingangssignal entspricht, das mit dem Meßsignal einer Nullpunktsmessung ermittelt wurde, und
daß im Normalbetrieb der Nullpunktskorrekturwert von dem verstärkten Eingangssignal vor der Analog-Digital-Wandlung abgezogen wird.

## FIG.1

## FIG.2

## FIG. 3

## FIG. 4

## FIG. 5

8

Europäisches Patentamt

## EUROPÄISCHER RECHERCHENBERICHT

Nummer der Anmeldung

EP 98 10 9842

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | REINHARD BERTERMANN: "Für hochgenaues Messen" ELEKTROTECHNIK., Bd. 68, Nr. 20, 25. November 1986, Seiten 26-32, XP002075737 WURZBURG DE * Seite 28, Absatz 1 - Seite 32, letzter Absatz; Abbildungen 2-4 * --- | 1,2,12 | G01D3/02 G01G3/147 |
| A | EP 0 758 739 A (MOTOROLA SEMICONDUCTEURS) 19. Februar 1997 * Zusammenfassung; Abbildung 1 * ----- | 1,12 | |

**RECHERCHIERTE SACHGEBIETE (Int.Cl.6)**

G01G
G01D
G01R

Der vorliegende Recherchenbericht wurde für alle Patentansprüche erstellt

| Recherchenort | Abschlußdatum der Recherche | Prüfer |
|---|---|---|
| DEN HAAG | 28. August 1998 | Ganci, P |

EPO FORM 1503 03.82 (P04C03)